Europäisches Patentamt

European Patent Office

Office européen des brevets

(11) Publication number: **0 291 490**
**A1**

## (12) EUROPEAN PATENT APPLICATION

(21) Application number: **88870085.3**

(22) Date of filing: **10.05.88**

(51) Int. Cl.⁴: **F 03 D 3/06**
**F 03 B 17/06**

(30) Priority: **13.05.87 PT 84863**

(43) Date of publication of application:
**17.11.88 Bulletin 88/46**

(84) Designated Contracting States:
**AT BE CH DE ES FR GB IT LI LU NL SE**

(71) Applicant: **Ribeiro da Silva, Mario Jose**
**rua do Taxa 350 1o ESQo**
**P-4700 Braga (PT)**

(72) Inventor: **Ribeiro da Silva, Mario Jose**
**rua do Taxa 350 1o ESQo**
**P-4700 Braga (PT)**

(74) Representative: **Kuborn, Jacques et al**
**Office Hanssens S.P.R.L. Square Marie-Louise, 40 (bte 19)**
**B-1040 Bruxelles (BE)**

(54) Rotor to extract energy from a moving fluid, and particularly from the wind.

(57) This invention refers to a rotor to extract energy from a moving fluid, and particularly from the wind, which includes a structure either rigid or flexible in which sails (1-4) are mounted whose surface is actuated by the wind, the structure rotating about an axis (6) perpendicular to the trajectory of the sails. According to the present invention, the rotor is defined by its sails being mobile and of a variable geometry, presenting themselves alternately facing the wind, open, and against the wind, closed. The rotation of the sails in their movement from open to closed and vice-versa is obtained by fixing them to the structure in adequate hinges (7).

This invention is primarily intended to extract energy from the wind but the invention can also be applied more generally to extract energy from other fluids in motion, namely from water streams, sea waves near the coast in the zone of the wave breakdown and maritime currents.

FIG. 1

EP 0 291 490 A1

## Description

## ROTOR TO EXTRACT ENERGY FROM A MOVING FLUID, AND PARTICULARLY FROM THE WIND

The present invention refers to a rotor to extract energy from a movinf fluid, and particularly from the wind, which consists mainly of a rigid or flexible structure in which sails are mounted whose surface is actuated by the wind. The machine rotates about a vertical axis which is perpendicular to the trajectory of the sails.

There are known systems which make use of the energy from the wind, with vertical axis, with dimensions and power outputs of different kinds. However, none present the essential characteristic of the present one, namely that the rotor sails are mobile, with a variable geometry alternatively facing the wind (sails open) and back to the wind (sails closed), in sequence, thus causing the movement of the rotor due to the kinetic energy of the wind. As demonstrated in laboratory and field test carried out with machines constructed on the principles of operation now described, that essential characteristic brings about advantages relatively to the known systems, namely more favourable ratios for the cost of manufacture and maintenance/power generated, apart from providing the possibility of construction of large structures with correspondingly large vanes.

Therefore, the object of the present invention consists in providing one rotor to capture the energy from the wind, of the type described in the introduction, whose sails are mobile and of variable geometry, presenting themselves alternately in the direction of the wind with the sails open and against the wind with the sails closed, thus offering minimum resistance to the wind during the rotation of the rotor. These characteristics lead to a scheme which is simple and allows for an efficient use of the kinetic energy of the wind.

The number of sails mounted in the afore-mentioned structure, which can carry several vanes, is variable, two more vanes being positioned uniformly in the perifery of the rotor.

For the sails to actuate in the way so intended in the present invention, they are mounted on the arms of the so mentioned structure by means of hinges which may be parallel or perpendicular to the arms and of any type that is adequate, ranging from simple door hinge types to more complicated elastic links.

To balance the sails of the rotor in all their positions, adjustable mechanisms have been though of in the present invention: weights, springs, torsion bars or similar mechanisms, as well as mechanical or hydraulic mechanisms.

Means of protection which deactivate the rotor sails when the wind speed reaches a pre-fixed value have also been devised to protect the system against destruction in hazardous conditions.

The sails may have several configurations depending on the relevant case: plane or with aerodynamic forms, rectangular, trapezoidal, triangular, etc., according to the wanted torque and the velocity of the wind.

The axis of the rotor structure may have any direction relatively to the horizontal direction, namely vertical or horizontal, but it is mainly a vertical axis rotor.

Finally, it is stressed that the principle on which the present invention is based also applies to any fluid in motion and not only to air. Therefore, the present invention may also be used to extract energy from water flows or from any other fluid in motion, such as water streams, water weaves near the coast in the zone of the wave breakdown of the maritime currents.

An object of the invention is thus to provide a rotor to extract the energy from a moving fluid, including a structure with arms on which sails are mounted, whose surface is actuated by the moving fluid, this rotor rotating around an axis of rotation which can be either perpendicular or parallel to the trajectory of the sails, respectively as the sails are mounted perpendicularly or parallel to that axis, characterized in that the sails are mobile and of a variable geometry type, presenting themselves during the rotation of the rotor either open when facing the moving fluid and receiving an impulse from the moving fluid, or automatically closed and presenting a minimum drag to the rotation, thus allowing for an efficient use of the kinetic energy of the moving fluid.

According to another feature of the invention the rotor is characterized by two or more sails located uniformly around the periphery of the so-mentioned structure of the rotor.

According to another feature of the invention, the rotor is characterized in that the mobility of the sails is attained by mounting them in adequate hinges in the so-mentioned structure, that may range from simple door-hinges to more sophisticated types of elastic links.

According to another feature of the invention the rotor is characterized in that means for balancing the sails in all their positions are provided, which consist of counterweights, springs, torsion bars or any other similar mechanisms.

According to another feature of the invention, the rotor is characterized in that it is auto-regulated, means of protection against excessive speed being provided, which is activated when the speed of the moving dluid exceeds a predetermined value.

According to another feature of the invention, the rotor is characterized in that the moving fluid is air.

According to another feature of the invention, the rotor is characterized in that the moving fluid is another fluid than air.

A practical materialization of the present invention, given here as a non-limitative example, is presented in the annexed drawings,whose figures are described as follows:

figure 1 presents a rotor according to the present invention with two pairs of sails mounted directly opposite across the periphery of the rotor in the upper and lower part of the structure, as a schematic representation.

figure 2 represents a rotor according to the present invention with three sails mounted 120° around the perimeter of the rotor, also as a schematic representation.

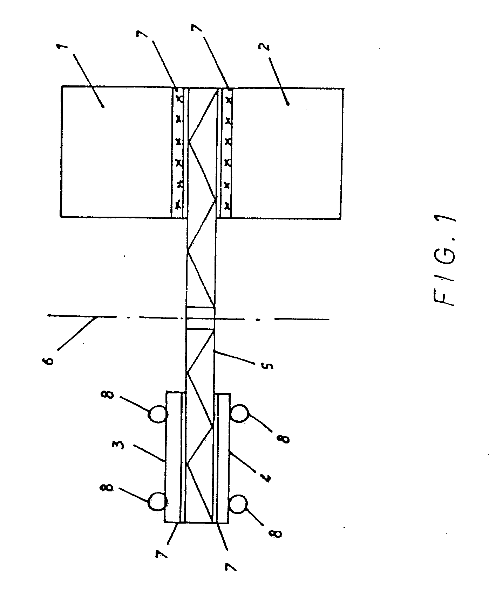

In these drawings, figure 1 shows the sails (1) to (4) of a rotor according to the present invention, mounted on the arms of a horizontal structure (5) which rotates around a vertical axis (6). In the example given in this figure two sails (1,3) are mounted in the upper part of the structure (5) and the other two sails (2,4) are mounted in the lower part of the same structure.

The sails (1) to (4) are mounted in the structure (5) and pivot around hinges (7). This pivoting is automatically produced by the force of the wind as the rotor rotates around its axis in such a way that the sails open when facing the wind and close when back to the wind. Figure 1 shows the sails (1,2) open and (3,4) closed.

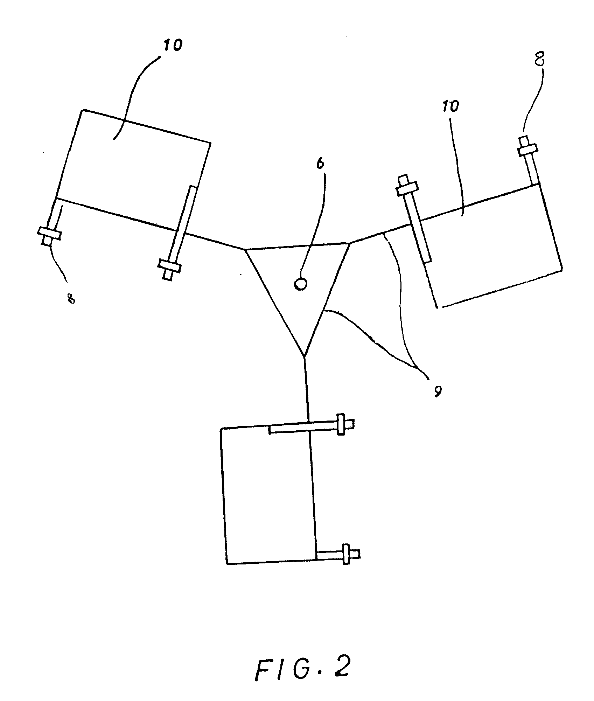

Figure 2 shows schematically a practical form of the present invention with three sails (10) mounted in a structure (9) which rotates around a vertical axis. The sails are mounted at 120° around the perimeter of the rotor and include adjustable counterweights (8) as means for balancing the sails.

**Claims**

1. A rotor to extract the energy from a moving fluid, including a structure with arms on which sails are mounted, whose surface is actuated by the moving fluid, this rotor rotating around an axis of rotation which can be either perpendicular or parallel to the trajectory of the sails, respectively as the sails are mounted perpendicularly or parallel to that axis, characterized in that the sails are mobile and of a variable geometry type, presenting themselves during the rotation of the rotor either open when facing the moving fluid and receiving an impulse from the moving fluid, or automatically closed and presenting a minimum drag to the rotation, thus allowing for an efficient use of the kinetic energy of the moving fluid.

2. A rotor as specified in claim 1, characterized by two or more sails located uniformly around the periphery of the so-mentioned structure of the rotor.

3. A rotor as specified in the previous claims, characterized in that the mobility of the sails is attained by mounting them in adequate hinges in the so-mentioned structure, that may range from simple door-hinges to more sophisticated types of elastic links.

4. A rotor as specified in the previous claims, characterized in that means for balancing the sails in all their positions are provided, which consist of counterweights, springs, torsion bars or any other similar mechanisms.

5. A rotor as specified in claim 1, characterized in that it is auto-regulated, means of protection against excessive speed being provided, which is activated when the speed of the moving dluid exceeds a predetermined value.

6. A rotor as specified in claim 1, characterized in that the moving fluid is air.

7. A rotor as specified in claim 1, characterized in that the moving fluid is another fluid than air.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-1 915 689  (MOORE)<br>* Page 1, line 46 - page 2, line 2 *<br>--- | 1-6 | F 03 D    3/06<br>F 03 B   17/06 |
| X | US-A-1 484 250  (BARNES)<br>* Page 1, line 78 - page 2, line 97 *<br>----- | 1,2,3,7 | |

TECHNICAL FIELDS
SEARCHED (Int. Cl.4)

F 03 D
F 03 B

The present search report has been drawn up for all claims

| Place of search | Date of completion of the search | Examiner |
|---|---|---|
| THE HAGUE | 04-08-1988 | DE WINTER P.E.F. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

...................................................................................
& : member of the same patent family, corresponding
     document

EPO FORM 1503 03.82 (P0401)